Europäisches Patentamt

European Patent Office

Office européen des brevets

(11) Numéro de publication: **0 331 572**
**A1**

## DEMANDE DE BREVET EUROPEEN

(21) Numéro de dépôt: **89400546.1**

(22) Date de dépôt: **28.02.89**

(51) Int. Cl.⁴: **G 09 B 5/04**
**A 61 B 5/00**

(30) Priorité: **03.03.88 FR 8802716**

(43) Date de publication de la demande:
**06.09.89 Bulletin 89/36**

(84) Etats contractants désignés:
**BE CH DE ES FR GB IT LI LU**

(71) Demandeur: **Sebert, Christian**
**94, rue Pierre Sémard**
**F-93000 Bobigny (FR)**

(72) Inventeur: **Sebert, Christian**
**94, rue Pierre Sémard**
**F-93000 Bobigny (FR)**

(74) Mandataire: **Sauvage, Renée**
**Cabinet Sauvage 100 bis, avenue de Saint-Mandé**
**F-75012 Paris (FR)**

(54) **Procédé de génération de programmes destinés à l'apprentissage psychologique de personnes notamment durant leurs périodes de sommeil.**

(57) La présente invention concerne un procédé de génération de programmes enregistrés sur deux pistes d'informations d'une bande magnétique.

Le procédé est caractérisé en ce qu'il consiste à enregistrer sur l'une des pistes d'enregistrement un programme subliminal de relaxation mélangé à un programme de blocage en une proportion supérieure à la proportion d'enregistrement de blocage et complémentaire de cette dernière et à enregistrer sur la seconde piste le programme subliminal de relaxation mélangé à un programme d'apprentissage en une proportion inférieure à la proportion d'enregistrement du programme d'apprentissage et complémentaire de cette dernière.

La présente invention trouve application pour l'apprentissage psychologique de personnes durant leurs périodes de sommeil.

EP 0 331 572 A1

Bundesdruckerei Berlin

## Description

### Procédé de génération de programmes destinés à l'apprentissage psychologique de personnes notamment durant leurs périodes de sommeil.

La présente invention concerne un procédé de génération de programmes destinés à l'apprentissage psychologique de personnes notamment pendant leurs périodes de sommeil.

La demande de brevet français No. 8600705 déposée le 20 Janvier 1986 au nom du demandeur décrit un système générateur de programmes destinés à l'apprentissage psychologique de personnes durant leurs périodes de sommeil, du type comprenant essentiellement un dispositif de reproduction de deux programmes spécialisés enregistrés respectivement sur deux pistes d'enregistrement d'un support d'information, tel qu'une bande magnétique, l'un des programmes spécialisés étant relatif à un programme de blocage de l'hémisphère gauche du cerveau de la personne, l'autre relatif à un programme d'enseignement ou d'apprentissage pour l'hémisphère droit. Le dispositif de reproduction est mis en service dès la détection par un détecteur approprié des ondes alpha et thêta émises durant la période de sommeil lors de la remontée des cycles après les ondes delta.

Le système ci-dessus décrit, en permettant la séparation des hémisphères cerébraux gauche et droit à l'écoute, par la lecture simultanée des deux pistes d'enregistrement fonctionne de façon satisfaisante pour que toute personne apprenne ou mémorise tout type d'information durant ses heures de sommeil.

Cependant, ced système offre un certain niveau de résistance à l'apprentissage psychologique de chaque personne du fait que les deux programmes spécialisés, notamment le programme de blocage, s'adresse uniquement à la zone consciente de réceptivité du cerveau.

La présente invention a pour but d'éliminer l'inconvénient ci-dessus en proposant un procédé de génération de programmes destinés à l'apprentissage psychologique de personnes notamment durant leurs périodes de sommeil, de type consistant à détecter des ondes alpha et thêta émises durant la période de sommeil ; à enregistrer sur une première piste d'enregistrement d'un support d'information, tel qu'une bande magnétique, un programme de blocage de l'hémisphère gauche du cerveau de la personne, à enregistrer sur une seconde piste d'enregistrement du support d'information un programme d'apprentissage ou d'enseignement pour l'hémisphère droit du cerveau ; à reproduire aux oreilles de la personne, respectivement et simultanément, les deux programmes enregistrés ; caractérisé en ce qu'il consiste à enregistrer également sur la première piste un programme subliminal de relaxation mélangé au programme de blocage en une proportion supérieure à la proportion d'enregistrement du programme de blocage et complémentaire de cette dernière ; et à enregistrer également sur la seconde piste le programme subliminal de relaxation mélangé au programme d'apprentissage en une proportion inférieure à la proportion d'enregistrement du programme d'apprentissage et complémentaire de cette dernière ; et en ce que les deux programmes de chaque piste sont complémentaires en qualité de sorte qu'une saturation en informations du cerveau soit obtenue sur les plages consciente et inconsciente de celui-ci.

Selon une caractéristique de l'invention, les proportions d'enregistrement des programmes subliminaux de relaxation respectivement sur les deux pistes d'enregistrement sont complémentaires.

Selon une autre caractéristique de l'invention, la proportion d'enregistrement sur la première piste du programme subliminal est d'environ 75% pour une proportion d'enregistrement du programme de blocage de 25% tandis que la proportion d'enregistrement sur la deuxième piste du programme subliminal est d'environ 25% pour une proportion d'enregistrement du programme d'apprentissage d'environ 75%.

L'invention sera mieux comprise et d'autres buts, caractéristiques, détails et avantages de celle-ci apparaîtront plus clairement au cours de la description explicative qui va suivre.

L'invention est basée sur l'utilisation d'un système générateur de programmes destinés à l'apprentissage psychologique de personnes notamment durant leurs périodes de sommeil tout à fait identique à celui décrit dans la demande de brevet français citée précédemment.

Un tel système comprend un détecteur d'ondes cérébrales, notamment des ondes alpha et thêta émises durant chaque période de sommeil d'une personne et un dispositif de reproduction de deux pistes d'enregistrement d'une bande magnétique relié en sortie du détecteur. Un casque souple d'écoute relié en sortie du dispositif de reproduction permet à la personne d'écouter durant son sommeil les programmes enregistrés sur la bande magnétique. Le système comprend de plus un dispositif de commande relié entre le détecteur et le dispositif de reproduction pour commander, par exemple à l'aide d'un relais, la lecture de programmes enregistrés sur la bande magnétique. Ce système prévoit de plus une unité de programmation horaire reliée électriquement au détecteur, au dispositif de reproduction et au dispositif de commande pour mettre sous tension ou hors tension de façon programmée à l'avance ces différents dispositifs. Le détecteur peut être constitué d'un élément en forme de pastille ayant une résistance ohmique variant avec le pH de la peau de la personne et faisant partie d'un pont de Wheastone à résistances et disposé de préférence au niveau du front de la personne à l'aide d'une bande élastique et jugulaire appropriées.

Sur l'une des deux pistes d'enregistrement de la bande magnétique est enregistré un programme de blocage de l'hémisphère gauche du cerveau de la personne tandis que sur l'autre piste d'enregistrement est enregistré un programme d'apprentissage ou d'enseignement pour l'hémisphère droit du cerveau. A titre d'exemple, le blocage de l'hémisphère gauche peut être réalisé par un programme compréhensible mais illogique par sa résolution tel que par exemple l'énoncé d'un problème mathématique insoluble. Le programme d'apprentissage destiné à l'hémisphère droit peut être un programme modifiant "l'image de soi" définie dans la demande de brevet français citée précédemment et conçu par exemple pour permettre à une personne de s'arrêter de fumer ou de maigrir.

Le fonctionnement du système ci-dessus décrit va être rapelé brièvement.

Pendant le sommeil de la personne, le détecteur détecte une variation du pH de la peau caractéristique des ondes cérébrales alpha et thêta ce qui se traduit en sortie du pont de Wheastone par une tension caractéristique des rythmes alpha et thêta. Cette tension est reçue par le dispositif de commande de la lecture simultanée des deux pistes d'enregistrement de la bande magnétique. Par le phénomène connu en soi de rétroversion du cerveau humain, l'oreille droite de la personne écoutera pour l'hémisphère gauche le programme de blocage tandis que l'oreille gauche écoutera le programme d'apprentissage.

Selon l'invention, on enregistre également sur chaque piste d'enregistrement un programme subliminal de relaxation qui est mélangé au programme de blocage sur l'une des pistes d'enregistrement en une proportion supérieure à la proportion d'enregistrement du programme de blocage et complémentaire de cette dernière et au programme d'apprentissage sur l'autre piste d'enregistrement en une proportion inférieure à la proportion d'enregistrement du programme d'apprentissage et complémentaire de cette dernière. Il existe actuellement de nombreux programmes subliminaux qui peuvent convenir dans le cadre de la présente invention, un tel programme subliminal consistant en un message particulier comportant de la musique et des mots mixés, dont la personne ne peut pas prendre conscience mais qu'elle entend.

A titre d'exemple, la proportion d'enregistrement du programme subliminal sur la piste comportant le programme de blocage est d'environ 75% pour une proportion d'enregistrement du programme de blocage de 25%. La proportion d'enregistrement du programme subliminal de relaxation sur l'autre piste comportant le programme d'apprentissage est d'environ 25% pour une proportion du programme d'apprentissage d'environ 75%. Toutes les techniques actuelles de mixage pour l'enregistrement sur chaque piste des programmes subliminal et d'apprentissage ou de blocage peuvent convenir et n'ont pas à être décrites en détail.

De plus, comme cela ressort des proportions définies ci-dessus à titre d'exemple, les proportions d'enregistrement des programmes subliminaux de relaxation respectivement sur les deux pistes d'enregistrement sont de préférence complémentaires.

Enfin, le programme subliminal enregistré sur l'une ou l'autre des deux pistes d'enregistrement est complémentaire en qualité du programme d'apprentissage ou de blocage, c'est-à-dire que les informations contenues dans ce programme ne s'opposent pas les unes aux autres.

Lors de la lecture simultanée des deux pistes d'enregistrement comportant chacune les deux programmes tels que définis ci-dessus, on obtient une saturation d'entrée des ondes enregistrées sur la plage consciente et inconsciente du cerveau tout en tenant compte du traitement séparé des deux hémisphères. Cette saturation d'informations en quantité et en qualité permet d'annuler complètement le niveau de résistance du cerveau surtout au niveau du programme de blocage ce qui permet un meilleur apprentissage psychologique de la personne durant ses heures de sommeil en comparaison à celui obtenu par le système décrit dans la demande de brevet français antérieure citée précédemment.

## Revendications

1. Procédé de génération de programmes destinés à l'apprentissage psychologique de personnes notamment durant leurs périodes de sommeil, du type consistant à détecter des ondes alpha et thêta émises durant la période de sommeil ; à enregistrer sur une première piste d'enregistrement d'un support d'information, tel qu'une bande magnétique, un programme de blocage de l'hémisphère gauche du cerveau de la personne ; à enregistrer sur une seconde piste d'enregistrement du support d'information un programme d'apprentissage ou d'enseignement pour l'hémisphère droit du cerveau ; à reproduire aux oreilles de la personne, respectivement et simultanément, les deux programmes enregistrés ; caractérisé en ce qu'il consiste à enregistrer également sur la première piste un programme subliminal de relaxation mélangé au programme de blocage en une proportion supérieure à la proportion d'enregistrement du programme de blocage et complémentaire de cette dernière et à enregistrer également sur la seconde piste le programme subliminal de relaxation mélangé au programme d'apprentissage en une proportion inférieure à la proportion d'enregistrement du programme d'apprentissage et complémentaire de cette dernière ; et en ce que les deux programmes de chaque piste sont complémentaires en qualité, de sorte qu'une saturation en informations du cerveau soit obtenue sur les plages consciente et inconsciente de celui-ci.

2. Procédé selon la revendication 1, caractérisé en ce que les proportions d'enregistrement des programmes subliminaux de relaxation respectivement sur les deux pistes d'enregistrement sont complémentaires.

3. Procédé selon la revendication 1 ou 2, caractérisé en ce que la proportion d'enregistrement du programme subliminal sur la première piste est d'environ 75% pour une proportion d'enregistrement du programme de blocage d'environ 25% et en ce que la proportion d'enregistrement du programme subliminal sur la seconde piste précitée est d'environ 25% pour une proportion d'enregistrement du programme d'enseignement d'environ 75%.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,Y | FR-A-2 593 312 (C. SEBERT)<br>* Revendications 1-4; figures *<br>--- | 1 | G 09 B 5/04<br>A 61 B 5/00 |
| Y | US-A-4 315 502 (D. GORGES)<br>* Colonne 1, lignes 55-64; colonne 2, lignes 3-15,47-51; colonne 7, lignes 65-68; colonne 8, lignes 1-7 * | 1 | |
| A | --- | 2,3 | |
| A | FR-A-2 497 983 (SARL MULTI-COMMERCE ARTICLES AND PRODUCTS, MCAP)<br>----- | | |

**DOMAINES TECHNIQUES RECHERCHES (Int. Cl.4)**

G 09 B
A 61 B

Le présent rapport a été établi pour toutes les revendications

| Lieu de la recherche | Date d'achèvement de la recherche | Examinateur |
|---|---|---|
| LA HAYE | 06-06-1989 | GORUN M. |

EPO FORM 1503 03.82 (P0402)